# FASCICULE DE BREVET EUROPEEN

(11) **EP 2 782 694 B1**
(45) Date de publication et mention de la délivrance du brevet: **16.03.2016**
(21) Numéro de dépôt: 12806535.6
(22) Date de dépôt: 19.11.2012
(51) Int. Cl.: B60Q 1/14

(54) **BLOC DE COMMANDE DE COLONNE DE DIRECTION D'UN VEHICULE COMPRENANT UNE INTERFACE D'ASSEMBLAGE PAR SERRAGE POUR LA FIXATION D'UNE MANETTE DE COMMANDE ET MANETTE DE COMMANDE ASSOCIEE**
LENKSÄULENSTEUEREINHEIT FÜR EIN FAHRZEUG MIT EINER KLEMMANORDNUNGSSCHNITTSTELLE ZUR BEFESTIGUNG EINES STEUERHEBELS UND ENTSPRECHENDER STEUERHEBEL
STEERING COLUMN CONTROL UNIT FOR A VEHICLE, INCLUDING A CLAMPING ASSEMBLY INTERFACE FOR ATTACHING A CONTROL LEVER, AND ASSOCIATED CONTROL LEVER

(30) Priorité: 25.11.2011 FR 1160784
(43) Date de publication de la demande: 01.10.2014
(73) Titulaire: Peugeot Citroën Automobiles SA, 78140 Vélizy Villacoublay (FR)
(72) Inventeur: HENRI, Regis, F-78790 Mulcent (FR)
(86) Numéro de dépôt international: PCT/FR2012/052669
(87) Numéro de publication internationale: WO 2013/076413

(56) Documents cités:
- WO-A1-97/20335

## Description

L'invention concerne les commandes de véhicule et plus particulièrement les commandes au volant ou sous volant telles que par exemple les commandes de vitesse sous volant et les commandes radio sous volant.

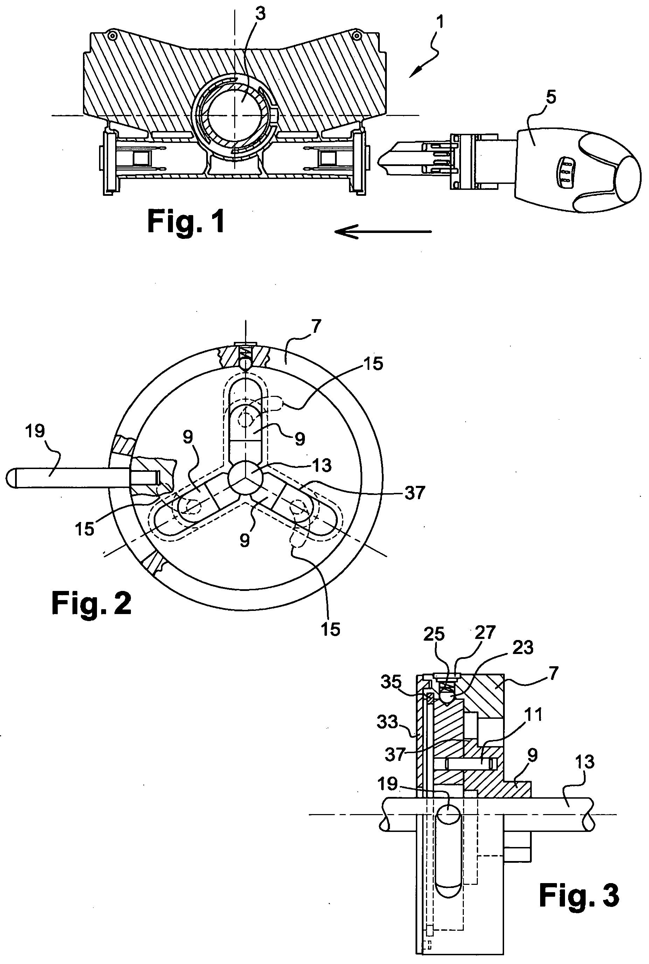

La figure 1 présente un bloc commande multifonction (1) de colonne de direction classique (ou haut de colonne) comprenant un axe de direction (3) pour la commande du volant et une manette (5) de commande destinée à être disposée sous le volant de direction. Généralement, ces manettes (5) présentent un embout conique et des moyens de clipage destinés à coopérer avec des moyens complémentaires prévus dans l'interface d'assemblage et disposés en bout de course d'une glissière. L'un des inconvénients rencontrés par ces interfaces d'assemblage est leur mise au point délicate, si bien qu'il reste souvent un jeu après le clipage de la manette. Ce jeu n'est pas acceptable d'un point de vue qualité perçue par le conducteur du véhicule, et pour le supprimer il est généralement nécessaire d'y insérer une cale. L'insertion d'une cale complique le montage de la manette et génère un coût additionnel. Par ailleurs la manette n'est plus démontable une fois fixée.

D'autres modes d'assemblage de manettes de commande ont été envisagés dans l'art antérieur. Par exemple, le document WO9720335 propose de retenir une manette de commande présentant un axe de fixation dans son interface d'assemblage par l'insertion d'une goupille de fixation dans un alésage transversal présenté par l'axe et ladite interface. Cette tige permet de bloquer la manette en translation. Malheureusement, la mise en oeuvre de ce mode d'assemblage implique une grande précision au niveau des côtes utilisées au risque sinon de générer un jeu perceptible par l'utilisateur lors des manipulations de la manette. Or une telle précision se révèle contraignante aussi bien au niveau de la production de l'interface et des manettes qu'au moment du montage puisque qu'elle implique une orientation précise de l'axe de la manette au moment de son insertion afin de placer les ouvertures en regard l'une de l'autre pour le passage de la goupille. Enfin, le retrait de la goupille n'est pas forcément aisé ce qui rend la manette difficilement démontable.

L'invention consiste à palier au moins une des inconvénients présentés par l'art antérieur en proposant un nouveau système pour l'assemblage d'une manette de commande sur un bloc de commande de colonne de direction. En particulier l'invention propose un nouveau système pour l'assemblage d'une manette sur un bloc de commande de colonne de direction qui soit simple et qui permette un montage isostatique de ladite manette.

A cet effet, l'invention a pour objet un bloc de commande de colonne de direction d'un véhicule comprenant une interface d'assemblage pour la fixation d'une manette de commande sur ledit bloc, remarquable en ce que ladite interface d'assemblage comprend un mandrin de serrage.

Selon des modes particuliers de réalisation, l'ensemble peut comprendre l'une ou plusieurs des caractéristiques suivantes, prises isolément ou selon toutes les combinaisons techniquement possibles :
- Le mandrin de serrage comprend un corps et son corps est monté fixe sur le bloc de commande, de sorte que son corps n'est mobile ni en translation ni en rotation par rapport au bloc de commande.
- Le mandrin de serrage comprend un corps présentant un alésage central et au moins deux alésages radiaux, et de préférence au moins trois alésages radiaux, convergeant vers l'alésage central et recevant chacun un mors.
- La manette de commande présente une queue de fixation et le mandrin de serrage comprend en outre une plaque mobile en rotation présentant un alésage central pour le passage de la queue de fixation de la manette et au moins deux fentes, et de préférence au moins trois fentes, dans lesquelles sont engagés des pions de liaison reliés aux mors si bien que la rotation de la plaque se traduit par un déplacement des mors entre une position de déverrouillage de l'interface d'assemblage où les mors sont éloignés les uns des autres de sorte à autoriser l'introduction de la queue de fixation de la manette de commande dans l'alésage central dudit mandrin de serrage, et une position de verrouillage de l'interface d'assemblage où les mors sont rapprochés les uns des autres de sorte à serrer ladite queue de fixation.

- Les mors présentent un épaulement permettant d'assurer leur retenue entre la plaque mobile et le corps du mandrin de serrage, de préférence par coopération avec un épaulement complémentaire au niveau des alésages radiaux dudit corps, sur la face du corps placé en regard de la plaque mobile.
- La plaque est reçue dans le corps du mandrin de serrage et présente des moyens de manipulation pour sa rotation, de préférence elle présenté sur sa tranche, en regard d'une ouverture dudit corps formant une fente, une tige de manipulation de telle sorte que le déplacement de la tige le long de l'ouverture induise une rotation de la plaque mobile, de préférence la tige est amovible.
- L'interface d'assemblage présente des moyens de maintien en position verrouillée, de préférence ces moyens comprennent un système ressort-bille associé au corps et à la plaque mobile.
- L'interface d'assemblage présente des moyens pour être ramenée automatiquement en position verrouillée, de préférence ces moyens comprennent un ressort spiralé associé à la plaque mobile.
- Le mandrin de serrage comprend au moins trois mors.
- Le corps du mandrin est cylindrique et la plaque mobile est circulaire.
- L'interface de fixation est réalisée en matériau plastique.

L'invention a également pour objet une manette de commande pour bloc de commande de colonne de direction d'un véhicule remarquable en ce qu'elle présente une queue de fixation, ladite queue étant configurée pour coopérer avec une interface d'assemblage d'un bloc de commande de colonne de direction tel que défini plus haut en vue de la fixation de ladite manette sur ledit bloc, de préférence la queue de fixation comprend au moins un méplat et/ou une portion présentant un rétrécissement de diamètre. La queue de fixation se présente sous forme d'un axe.

L'invention concerne un ensemble comprenant un bloc de commande de colonne de direction tel que défini plus haut et au moins une manette de commande telle que définie plus avant.

L'invention concerne enfin un véhicule, de préférence automobile, caractérisé en ce qu'il comprend bloc de commande de direction tel que défini plus haut, de préférence, il comprend en outre une manette de commande telle que définie plus avant.

Comme on l'aura compris à la lecture de la définition qui vient d'en être donnée, l'invention consiste à pourvoir une manette de commande d'une queue de fixation se présentant sous forme d'un axe, et à fixer une manette de commande sur un bloc de commande de direction par serrage de ladite queue entre les mâchoires d'un mandrin de serrage. L'invention propose une structure simple et robuste pour assurer la liaison d'une manette qui offre l'avantage supplémentaire d'être réversible.

On notera qu'il est déjà connu de l'art antérieur des mandrins de serrage réversibles comprenant au moins trois mors et permettant de maintenir un axe en position. C'est le cas par exemple des ensembles décrits dans les documents FR2369044, FR2276130 et EP1683658. Néanmoins ces documents sont relatifs à des machines outils utilisées notamment dans le cadre de l'usinage des pièces. Il s'agit de dispositifs pour le maintien en position d'axe pendant des opérations visant à les transformer et non pas d'une interface d'assemblage d'une manette de commande sur un bloc de commande de direction comme dans l'invention. On notera en particulier que le mandrin de serrage de l'interface d'assemblage selon l'invention est monté fixe dans le bloc de commande et que son corps n'est mobile ni en translation, ni en rotation.

L'invention sera mieux comprise et d'autres aspects et avantages apparaîtront clairement à la lecture de l'exemple de réalisation qui suit donné en référence aux planches de dessins annexées sur lesquelles :
- La figure 1 représente un ensemble constitué d'un bloc de commande de direction et d'une manette de commande sous volant selon l'art antérieur ;
- La figure 2 est une vue de face d'une interface d'assemblage selon l'invention
- La figure 3 est une représentation schématique en coupe et vue de profil d'une interface d'assemblage selon l'invention ;
- Les figures 4 et 5 illustrent la cinématique d'actionnement d'une interface d'assemblage d'une manette de commande sur un bloc de commande de direction selon l'invention.

La figure 1 ayant déjà été commentée en partie introductive, on se référera maintenant aux figures 2 et 3 présentant respectivement une vue frontale et de profil en coupe de l'interface d'assemblage d'une manette de commande sur un bloc de commande de colonne de direction selon l'invention. L'interface d'assemblage comprend un mandrin de serrage destiné à recevoir dans son alésage central la queue de fixation (13) d'une manette de commande. Le mandrin de serrage comprend un corps (7), de forme cylindrique, faisant avantageusement office de boîtier et fermé sur une de ses faces par un couvercle (33). Sur sa face opposée à celle recevant le couvercle (33), le corps (7) présente un alésage central et au moins deux alésages radiaux et de préférence au moins trois alésages radiaux, convergeant vers l'alésage central. Les alésages radiaux sont configurés pour guider les mors (9) en direction de l'alésage central dans un sens de serrage de la queue de la manette ou en direction opposée dans un sens de desserrage. Les mors (9) présentent avantageusement un épaulement (37) semi-circonférentiel permettant d'assurer leur retenue entre la plaque mobile (21) et le corps (7) du mandrin de serrage, de préférence par coopération avec un épaulement complémentaire au niveau des alésages radiaux dudit corps (7). L'actionnement des mors (9) est réalisé par la rotation d'une plaque (21) mobile en rotation, reçue dans le corps (7) et présentant un alésage central pour le passage de la queue (13) de la manette. La plaque mobile est de préférence circulaire et comprend au moins deux, et de préférence trois fentes (15). Des pions de liaison (11) associés aux mors (9) sont engagés dans lesdites fentes (15) de sorte à pouvoir s'y déplacer. Ainsi, la rotation de la plaque (21) dans un sens ou dans l'autre se traduit par un déplacement des pions (11) de liaison dans les fentes (15) et en conséquent des mors (9). Les mors (9) se déplacent dans un sens de rapprochement les uns des autres pour réaliser le serrage de la queue (13) de la manette, et donc sa fixation sur le bloc de commande, ou dans un sens d'éloignement les uns des autres pour permettre l'introduction de ladite queue (13) dans l'alésage central ou la libération de ladite queue (13) de la manette. Un anneau d'arrêt (35) monté sur le corps (7) et placé entre la plaque (21) circulaire mobile et le couvercle (33) assure le maintien en position des différents éléments constitutifs dudit mandrin.

Selon l'invention, au moins une partie du corps (7) est fixée sur le bloc de commande de colonne de direction. Le mandrin de serrage est monté fixe, si bien que son corps (7) n'est mobile ni en translation ni en rotation par rapport au bloc de commande. Le mandrin de serrage sert de point d'ancrage pour la manette. A cet effet, le mandrin de serrage présente comme on l'aura compris au moins deux mors, et de préférence au moins trois mors (9), montés déplaçables dans les alésages radiaux du corps (7). L'homme du métier choisira avantageusement un mandrin de serrage à au moins trois mors pour garantir l'isostatisme de la manette. Si l'invention est décrite en relation avec des mors se déplaçant radialement en direction de l'alésage central, il est également possible d'envisager l'emploi d'un mandrin de serrage pour lesquels les mors se déplacent d'avant en arrière ou inversement à l'intérieur d'alésages convergeant vers l'alésage central pour assurer le serrage ou la libération de la queue de la manette de commande. De même, les mors (9) peuvent présenter un pied permettant d'augmenter leur surface de contact (17) avec la queue de fixation de la manette et d'améliorer ainsi leur capacité de retenue. Cette surface (17) de contact des mors (9) avec la queue (13) peut présenter une surface lisse ou présenter un relief tel qu'une denture.

On notera au passage qu'un des avantages présentés par l'invention est de rendre la fixation de la manette de commande réversible, ce qui facilite les opérations d'entretien.

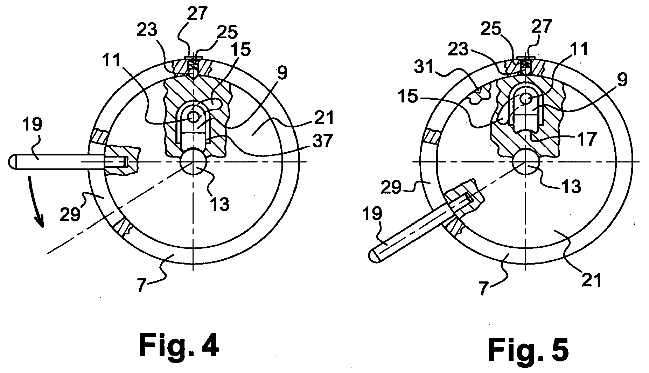

La cinématique d'actionnement de l'interface d'assemblage selon l'invention va maintenant être décrite en référence aux figures 4 et 5. La position de rapprochement des mors (9) les uns des autres, à savoir la position de fermeture ou verrouillage de l'interface d'assemblage est représenté à la figure 4. La position d'éloignement des mors (9) les uns des autres, à savoir position d'ouverture ou de déverrouillage de l'interface d'assemblage est représentée à la figure 5.

La figure 4 présente l'interface d'assemblage en position verrouillée. Dans cette position, les mors (9) viennent se positionner contre la queue (13) de la manette pour la maintenir en position. Pour des raisons de clarté seul un mors (9) a été représenté mais la cinématique de verrouillage et de déverrouillage qui va être présentée reste valable pour les au moins deux mors et de préférence au moins trois mors (9) présentés par le mandrin de serrage de l'interface selon l'invention. Le corps (7) de l'interface faisant office de boîtier présente sur son flanc une ouverture (29) formant une fente latérale et rendant accessible la plaque (21) mobile en rotation depuis l'extérieur dudit boîtier. Une tige (19) amovible est insérée dans cette ouverture (29) et pénètre un trou borgne de ladite plaque (21). La tige amovible (19) peut alors être manoeuvrée par le monteur et ainsi être déplacée dans l'ouverture (29) entraînant avec elle la plaque (21) dans un mouvement de rotation. Les pions de liaison (11) sont en conséquent entraînés dans les fentes (15) de la plaque circulaire (21) et vont déplacer les mors (9). Les mors (9) sont ainsi éloignés les uns des autres jusqu'à la position de déverrouillage de ladite interface ainsi qu'illustrée sur la figure 5. Le verrouillage de l'interface de liaison peut s'effectuer en réalisant les opérations inverses.

Néanmoins, selon un mode de réalisation préféré de l'invention, l'interface d'assemblage présente des moyens pour rappeler automatiquement le mandrin de serrage en position verrouillée depuis sa position déverrouillée, et éventuellement l'y maintenir. Par exemple, ces moyens sont élastiques et la plaque est associée à un ressort spiralé (non représenté) qui va la maintenir en position verrouillée tant qu'une force supérieure au coefficient de raideur du ressort ne lui est pas appliquée, par exemple par le biais de la tige de manipulation pour la faire tourner. La mise en oeuvre d'un ressort spiralé est également avantageuse pour constamment et automatiquement ramener le mandrin de serrage en position verrouillée, et minimiser ainsi les risques de libération de la manette. En particulier, l'emploi de moyen élastiques de rappel en position verrouillée prévient un éventuel desserrage du mandrin induit par les vibrations du véhicule en roulage.

Pour fixer une manette sur un bloc de commande selon l'invention, le monteur effectue les opérations suivantes :
- Insérer la tige de manipulation dans le trou borgne qui lui est dédié au travers de l'ouverture du boîtier;
- manoeuvrer ladite tige pour déverrouiller l'interface d'assemblage en faisant tourner la plaque mobile;
- insérer la queue de la manette de commande dans l'alésage central de l'interface d'assemblage, de préférence de sorte à ce qu'elle traverse le mandrin de serrage de part en part ;
- manoeuvrer ladite tige dans le sens inverse pour verrouiller l'interface ou relâcher ladite tige de sorte à ce que l'interface se replace automatiquement en position verrouillée sous l'effet de moyens élastiques ;
- retirer la tige de manipulation.

On aura compris que si la tige de manipulation est préférentiellement amovible afin que l'interface d'assemblage soit préférentiellement manipulée par du personnel spécialisé, il est également envisageable que ladite tige soit retenue de manière définitive sur la plaque mobile, voire venue de matière avec cette même plaque. De même, si l'interface d'assemblage est préférentiellement actionnable manuellement, son verrouillage et son déverrouillage peuvent être motorisés.

Avantageusement, l'interface d'assemblage présente en outre, de manière complémentaire ou alternative aux moyens élastiques de rappel en position verrouillée, des moyens de maintien en position verrouillée. Ces moyens peuvent prendre des formes diverses, dans notre exemple, ils sont constitués d'un système bille-ressort. La plaque (21) mobile présente à cet effet sur un de ses flancs un logement (31) pouvant recevoir en partie une bille (23). Lorsque la plaque (21) est en position verrouillée, ce logement et placé en regard d'un percement du boitier (7) présentant par ailleurs un ressort (25) destiné à pousser la bille (23) en direction de la plaque (21). Le tout est fermé par un capuchon (27) de maintien. Ainsi lorsque la plaque (21) est en position de verrouillage, la bille (23) est poussée de sorte à pénétrer en partie dans le logement (31) de ladite plaque (21) et coopère avec le boitier (7) pour faire office de verrou. Lorsqu'une force supérieure à celle du ressort (25) est appliquée à la plaque (21) par le biais de la tige (19) de manipulation pour la faire tourner alors la bille (23) remonte dans le percement du boîtier et la plaque (21) peut tourner.

Selon l'invention, l'interface d'assemblage est réalisée au moins en partie et de préférence intégralement en matériau plastique.

L'interface d'assemblage est montée dans une cavité dédiée du bloc de commande de direction. La manette de commande présente comme on l'a compris une queue de fixation pour sa liaison sur le bloc de commande via l'interface d'assemblage selon l'invention. Cette queue est dimensionnée pour s'insérer dans le mandrin suffisamment profondément pour pouvoir y être retenue par les mors ou pour le traverser de part en part. De manière avantageuse, elle présente au moins un méplat au niveau de la zone de serrage des mors, ou une légère réduction de diamètre. Ce ou ces méplats ou la réduction de diamètre permettent d'améliorer la capacité de fixation de l'interface d'assemblage. Ils permettent également de bloquer en translation la manette dans l'interface d'assemblage lorsque la queue traverse le mandrin. En effet, les reliefs montrés de part et d'autre du ou des méplats ou de la portion de diamètre réduit forment un épaulement qui va faire butée contre les mors empêchant le dégagement de la queue de la manette même en cas d'un éventuel léger desserrage du mandrin induit par les vibrations du véhicule en roulage. La queue est mise en place dans l'interface d'assemblage de sorte à placer le ou les méplats ou la portion de queue présentant un diamètre réduit en regard des mors par exemple par un système de butée de fin de course. Par ailleurs, la présence d'au moins un méplat sur la queue de fixation de la manette permet en outre d'obtenir une fixation isostatique de la manette avec un mandrin à deux mors.

## Revendications

1. Bloc de commande de colonne de direction d'un véhicule comprenant une interface d'assemblage pour la fixation d'une manette de commande sur ledit bloc, **caractérisé en ce que** ladite interface d'assemblage comprend un mandrin de serrage.

2. Bloc de commande selon la revendication 1 **caractérisé en ce que** le mandrin de serrage comprend un corps (7) et son corps (7) est monté fixe sur ledit bloc de commande.

3. Bloc de commande selon la revendication 1 ou 2 **caractérisé en ce que** le mandrin de serrage comprend un corps (7) présentant un alésage central et au moins deux alésages radiaux, et de préférence au moins trois alésages radiaux, convergeant vers l'alésage central et recevant chacun un mors (9).

4. Bloc de commande selon la revendication 3, la manette de commande présentant une queue (13) de fixation, **caractérisé en ce que** le mandrin de serrage comprend en outre une plaque (21) mobile en rotation présentant un alésage central et au moins deux fentes (15) et de préférence au moins trois fentes (15), dans lesquelles sont engagés des pions de liaison (11) reliés aux mors (9) si bien que la rotation de la plaque (21) se traduit par un déplacement des mors (9) entre une position de déverrouillage de l'interface d'assemblage où les mors (9) sont éloignés les uns des autres de sorte à autoriser l'introduction de la queue (13) de fixation de la manette de commande dans l'alésage central dudit mandrin de serrage, et une position de verrouillage de l'interface d'assemblage où les mors (9) sont rapprochés les uns des autres de sorte à serrer ladite queue (13) de fixation.

5. Bloc de commande selon la revendication 4 **caractérisé en ce que** les mors (9) présentent un épaulement (37) permettant d'assurer leur retenue entre la plaque (21) mobile et le corps (7) du mandrin de serrage, de préférence par coopération avec un épaulement complémentaire au niveau des alésages radiaux dudit corps (7).

6. Bloc de commande selon l'une des revendications 4 ou 5 **caractérisé en ce que** la plaque (21) est reçue dans le corps (7) du mandrin de serrage et présente des moyens de manipulation pour sa rotation, de préférence elle présente sur sa tranche, en regard d'une ouverture (29) dudit corps (7) formant une fente, une tige (19) de manipulation de telle sorte que le déplacement de la tige le long de l'ouverture (29) induise une rotation de la plaque (21) mobile, de préférence la tige (19) est amovible.

7. Bloc de commande selon l'une des revendications 4 à 6 **caractérisé en ce que** l'interface d'assemblage présente des moyens de maintien en position verrouillée, de préférence ces moyens comprennent un système ressort-bille associé au corps (7) et à la plaque (21) mobile.

8. Bloc de commande selon l'une des revendications 4 à 7 **caractérisé en ce que** l'interface d'assemblage présente des moyens pour être ramenée automatiquement en position verrouillée, de préférence ces moyens comprennent un ressort spiralé associé à la plaque (21) mobile.

9. Manette de commande pour bloc de commande de colonne de direction d'un véhicule **caractérisée en ce qu'**elle présente une queue (13) de fixation, ladite queue étant configurée pour coopérer avec une interface d'assemblage d'un bloc de commande de colonne de direction selon l'une des revendications 1 à 8 en vue de la fixation de ladite manette sur ledit bloc, et **en ce que** la queue de fixation (13) comprend au moins un méplat et/ou une portion présentant un rétrécissement de diamètre.

10. Véhicule, de préférence automobile, **caractérisé en ce qu'**il comprend bloc de commande selon l'une des revendications 1 à 8, de préférence, il comprend en outre une manette selon la revendication 9.

## Patentansprüche

1. Lenksäulensteuereinheit eines Fahrzeugs, die eine Verbindungsschnittstelle für die Befestigung eines Steuerhebels auf der Einheit umfasst, **dadurch gekennzeichnet, dass** die Verbindungsschnittstelle ein Spannfutter umfasst.

2. Steuereinheit nach Anspruch 1, **dadurch gekennzeichnet, dass** das Spannfutter einen Körper (7) umfasst und sein Körper (7) fest auf der Steuereinheit montiert ist.

3. Steuereinheit nach Anspruch 1 oder 2, **dadurch gekennzeichnet, dass** das Spannfutter einen Körper (7) umfasst, der eine zentrale Bohrung und mindestens zwei radiale Bohrungen und vorzugsweise mindestens drei radiale Bohrungen umfasst, die in Richtung der zentralen Bohrung konvergieren und jeweils eine Backe (9) aufnehmen.

4. Steuereinheit nach Anspruch 3, wobei der Steuerhebel einen Befestigungsschaft (13) aufweist, **dadurch gekennzeichnet, dass** das Spannfutter ferner eine rotierend bewegliche Platte (21) umfasst, die eine zentrale Bohrung und mindestens zwei Schlitze (15) und vorzugsweise mindestens drei Schlitze (15) aufweist, in welche mit den Backen (9) verbundene Verbindungsstifte (11) eingreifen, so dass die Rotation der Platte (21) durch eine Verlagerung der Backen (9) zwischen einer entriegelten Position der Verbindungsschnittstelle, in welcher die Backen (9) voneinander entfernt sind, wodurch das Einsetzen des Befestigungsschafts (13) des Steuerhebels in die zentrale Bohrung des Spannfutters möglich ist, und einer verriegelten Position der Verbindungsschnittstelle, in welcher die Backen (9) aneinander angenähert sind, wodurch der Befestigungsschaft (13) gespannt wird, erfolgt.

5. Steuereinheit nach Anspruch 4, **dadurch gekennzeichnet, dass** die Backen (9) einen Absatz (37) aufweisen, der erlaubt, ihren Halt zwischen der beweglichen Platte (21) und dem Körper (7) des Spannfutters vorzugsweise durch Zusammenwirken mit einem komplementären Absatz im Bereich der radialen Bohrungen des Körpers (7) zu sichern.

6. Steuereinheit nach einem der Ansprüche 4 oder 5, **dadurch gekennzeichnet, dass** die Platte (21) in dem Körper (7) des Spannfutters aufgenommen ist und für ihre Rotation Betätigungsmittel aufweist, wobei sie vorzugsweise auf ihrem Rand gegenüber einer Öffnung (29) des Körpers (7), der einen Schlitz bildet, eine Betätigungsstange (19) aufweist, so dass die Verlagerung der Stange entlang der Öffnung (29) eine Rotation der beweglichen Platte (21) bewirkt, wobei die Stange (19) vorzugsweise lösbar ist.

7. Steuereinheit nach einem der Ansprüche 4 bis 6, **dadurch gekennzeichnet, dass** die Verbindungsschnittstelle Haltemittel in verriegelter Position aufweist, wobei diese Mittel vorzugsweise ein dem Körper (7) und der beweglichen Platte (21) zugeordnetes Feder-Kugel-System umfassen.

8. Steuereinheit nach einem der Ansprüche 4 bis 7, **dadurch gekennzeichnet, dass** die Verbindungsschnittstelle Mittel aufweist, um automatisch in verriegelte Position geführt zu werden, wobei diese Mittel vorzugsweise eine der beweglichen Platte (21) zugeordnete Spiralfeder umfassen.

9. Steuerhebel für Lenksäulensteuereinheit eines Fahrzeugs, **dadurch gekennzeichnet, dass** er einen Befestigungsschaft (13) aufweist, wobei der Schaft konfiguriert ist, um mit einer Verbindungsschnittstelle einer Lenksäulensteuereinheit nach einem der Ansprüche 1 bis 8 zwecks Befestigung des Hebels auf der Einheit zusammenzuwirken, und dass der Befestigungsschaft (13) mindestens eine Abflachung und/oder einen Abschnitt, der eine Durchmesserverringerung aufweist, umfasst.

10. Fahrzeug, vorzugsweise Kraftfahrzeug, **dadurch gekennzeichnet, dass** es eine Steuereinheit nach einem der Ansprüche 1 bis 8 umfasst, wobei es vorzugsweise ferner einen Hebel nach Anspruch 9 umfasst.

## Claims

1. Steering column control unit for a vehicle comprising a clamping assembly interface for attaching a control lever on said unit, **characterized in that** said assembly interface comprises a clamping chuck.

2. Control unit according to claim 1, **characterized in that** the clamping chuck comprises a body (7) and its body (7) is fixedly mounted on said control unit.

3. Control unit according to claim 1 or 2, **characterized in that** the clamping chuck comprises a body (7) having a central bore and at least two radial bores, and preferably at least three radial bores, converging towards the central bore and each receiving a jaw (9).

4. Control unit according to claim 3, the control lever having a spigot (13), **characterized in that** the clamping chuck further comprises a rotatably movable plate (21) having a central bore and at least two slots (15) and preferably at least three slots (15), into which are engaged connecting pins (11) connected to the jaws (9) so that the rotation of the plate (21) is expressed by a displacement of the jaws (9) between a locking position of the assembly interface wherein the jaws are distant from each other so as to allow introduction of the spigot (13) of the control lever into the central bore of said clamping chuck, and a position for locking the assembly interface wherein the jaws (9) are moved closer to each other so as to clamp said spigot (13).

5. Control unit according to claim 4, **characterized in that** the jaws (9) have a shoulder (37) giving the possibility of ensuring their retention between the movable plate (21) and the body (7) of the clamping chuck, preferably by cooperation with a mating shoulder at the radial bores of said body (7).

6. Control unit according to one of claims 4 or 5, **characterized in that** the plate (21) is received in the body (7) of the clamping chuck and has handling means for its rotation, preferably it has on its edge, facing an aperture (29) of said body (7) forming a slot, a handling rod (19) so that the displacement of the rod along the aperture (29) induces a rotation of the movable plate (21), preferably the rod (19) is removable.

7. Control unit according to one of claims 4 to 6, **characterized in that** the assembly interface has means for maintaining a locked position, preferably these means comprise a spring-bead system associated with the body (7) and with the movable plate (21).

8. Control unit according to one of claims 4 to 7, **characterized in that** the assembly interface has means so as to be returned automatically to the locked position, preferably these means comprise a coil spring associated with the movable plate (21).

9. Control lever for a steering column control unit of a vehicle, characterizing that it has a spigot (13), said spigot being configured for cooperating with an assembly interface of a steering column control unit according to one of claims 1 to 8 with view to attaching said lever on said unit, and in that the spigot (13) comprises at least one flat and/or a portion exhibiting a diameter shrinkage.

10. Vehicle, preferably an automotive vehicle, characterizing that it comprises a control unit according to one of claims 1 to 8, preferably, it further comprises a lever according to claim 9.
